# EUROPÄISCHE PATENTSCHRIFT

(11) **EP 2 427 947 B1**
(45) Veröffentlichungstag und Bekanntmachung des Hinweises auf die Patenterteilung: **25.01.2017**
(21) Anmeldenummer: 10712370.5
(22) Anmeldetag: 23.02.2010
(51) Int. Cl.: H02J 9/02

(54) **NOTSTROMVERSORGUNGSEINRICHTUNG**
EMERGENCY POWER SUPPLY DEVICE
DISPOSITIF D'ALIMENTATION DE SECOURS

(30) Priorität: 05.05.2009 DE 102009025747
(43) Veröffentlichungstag der Anmeldung: 14.03.2012
(73) Patentinhaber: SSB Wind Systems GmbH & Co. KG, 48499 Salzbergen (DE)
(72) Erfinder: HAGEDORN, Ralf, 49451 Holdorf (DE)
(86) Internationale Anmeldenummer: PCT/EP2010/052234
(87) Internationale Veröffentlichungsnummer: WO 2010/127885

(56) Entgegenhaltungen:
- WO-A1-02/05406
- WO-A1-2006/069573
- DE-A1-102005 030 709
- DE-A1-102007 006 966
- DE-A1-102007 049 313
- JP-A- 2001 028 846
- JP-A- 2005 086 969
- US-A1- 2004 189 251

## Beschreibung

Die Erfindung betrifft eine Notstromversorgungseinrichtung für ein Rotorblattverstellsystem einer Windkraftanlage nach dem Oberbegriff des Anspruchs 1. Ferner betrifft die Erfindung ein Verfahren zum Betreiben einer Notstromversorgungseinrichtung eines Rotorblattverstellsystems einer Windkraftanlage.

Bei modernen Windkraftanlagen erfolgt die Leistungs- und Drehzahlregelung über die Veränderung des Rotorblattwinkels, zu dessen Verstellung Blattverstellsysteme verwendet werden. Typischerweise handelt es sich hierbei um hydraulische oder elektrische Systeme. Ferner wird die Verstellung des Blattwinkels auch zum Abfahren und Störabfahren der Windkraftanlage benutzt, sodass das Blattverstellsystem das primäre Bremssystem der Windkraftanlage darstellt. Um die Verfügbarkeit des Blattverstellsystems sicherzustellen, werden Energiespeicher verwendet, die im Falle eines Ausfalls der Primär-Energieversorgung der Windkraftanlage das System mit Energie versorgen. Bei elektrischen Blattverstellsystemen werden als Energiespeicher typischerweise Akkumulatoren verwendet, deren Verfügbarkeit durch Ladesysteme aufrecht erhalten wird. In der Regel werden diese Energiespeicher für jedes Rotorblatt autark ausgeführt, wozu typischerweise ein Ladegerät verwendet wird, das mittels Schaltelementen zyklisch auf die einzelnen Akkumulatoren umschaltet.

Aus der DE 10 2005 030 709 A1 ist ein Stellantrieb für ein Rotorblatt einer Windkraftanlage bekannt, der einen elektrischen Motor und einen Frequenzumrichter umfasst. An den Zwischenkreis des Frequenzumrichters ist eine Notenergieversorgungseinrichtung angeschlossen, die einen eine elektrische Stützspannung bereitstellenden und eine Serienschaltung von Akkumulatoreinheiten aufweisenden Energiespeicher umfasst, für den eine Ladevorrichtung vorgesehen ist, die zum Aufladen einer einzelnen Akkumulatoreinheit ausgebildet ist. Ferner ist eine Schaltvorrichtung vorgesehen, mit der eine einzelne der Akkumulatoreinheiten mit der Ladevorrichtung verbunden werden kann.

Nachteilig ist, dass bei Ausfall der Ladevorrichtung die Notenergieversorgungseinrichtung nicht mehr betrieben werden kann, sodass die Windkraftanlage heruntergefahren werden muss. Ferner ist durch das zyklische Umschalten des Ladegeräts keine optimale Vollladung bzw. Nachladung möglich. Insbesondere addieren sich durch den Einsatz nur eines Ladegeräts die Nachladezeiten für jedes Rotorblatt.

Zur Erhöhung der Verfügbarkeit ist es möglich, zwei Ladegeräte einzusetzen und durch eine geeignete Anordnung der Schaltelemente ein redundantes System aufzubauen. Die Nachladezeiten addieren sich dann aber immer noch.

Ferner ist der Einsatz eines separaten Ladegerätes je Achse möglich. Zwar verringert sich dadurch die Nachladezeit, der Ausfall eines Ladegeräts führt aber immer noch zu einem Ausfall des Systems.

Ausgehend hiervon liegt der Erfindung die Aufgabe zugrunde, eine Notstromversorgungseinrichtung der eingangs genannten Art derart weiterzubilden, dass bei geringer Nachladedauer die Verfügbarkeit erhöht werden kann.

Diese Aufgabe wird erfindungsgemäß durch eine Notstromversorgungseinrichtung nach Anspruch 1 und durch ein Verfahren nach Anspruch 14 gelöst. Bevorzugte Weiterbildungen der Erfindung sind in den Unteransprüchen gegeben.

Die erfindungsgemäße Notstromversorgungseinrichtung für ein Rotorblattverstellsystem einer Windkraftanlage weist mehrere elektrische Energiespeicher, ein elektrisches Ladegerät und eine elektrische Schaltungsanordnung auf, mittels welcher das Ladegerät mit mehreren der Energiespeicher elektrisch gekoppelt werden kann, wobei ein oder mehrere zusätzliche Ladegeräte vorgesehen sind, sodass die Anzahl der Ladegeräte der Anzahl der Energiespeicher entspricht, wobei mittels der Schaltungsanordnung jedes der Ladegeräte mit mehreren der Energiespeicher und jeder der Energiespeicher mit mehreren der Ladegeräte elektrisch gekoppelt werden kann, und wobei jedem der Energiespeicher genau eines der Ladegeräte als Hauptladegerät und genau ein anderes der Ladegeräte als Nebenladegerät zugeordnet ist.

Bei der erfindungsgemäßen Notstromversorgungseinrichtung kann die Aufgabe eines defekten Ladegerätes von einem oder wenigstens einem der anderen Ladegeräte übernommen werden, sodass die Verfügbarkeit der Notstromversorgungseinrichtung relativ hoch ist. Da ferner die Anzahl der Ladegeräte der Anzahl der Energiespeicher entspricht, kann bei funktionierenden Ladegeräten jeder der Energiespeicher mit jeweils einem der Ladegeräte, vorzugsweise dauerhaft, elektrisch verbunden sein, sodass die Nachladedauer relativ gering gehalten werden kann. Ferner ist ein ständiges Umschalten von Ladegeräten auf Energiespeicher vermeidbar, sodass die Schaltelemente nicht ständig sondern nur im Fehlerfall betätigt werden müssen.

Bevorzugt ist jedes der Ladegeräte gleichzeitig nicht mit mehreren der Energiespeicher gekoppelt. Insbesondere ist zu jeder Zeit jedes der Ladegeräte nur mit einem einzigen oder mit keinem der Energiespeicher gekoppelt. Ferner ist bevorzugt jeder der Energiespeicher gleichzeitig nicht mit mehreren der Ladegeräte gekoppelt. Insbesondere ist zu jeder Zeit jeder der Energiespeicher nur mit einem einzigen oder mit keinem der Ladegeräte gekoppelt.

Gemäß einer Ausgestaltung der Erfindung kann mittels der Schaltungsanordnung jedes der Ladegeräte mit jedem der Energiespeicher elektrisch gekoppelt werden. Bevorzugt ist mittels der Schaltungsanordnung aber jedes der Ladegeräte mit zwei der Energiespeicher und/oder jeder der Energiespeicher mit zwei der Ladegeräte koppelbar.

Jedem der Energiespeicher ist genau eines der Ladegeräte als Hauptladegerät zugeordnet. In einem normalen Betriebszustand ist insbesondere jeder der Energiespeicher nur mit dem ihm zugeordneten Hauptladegerät, dauerhaft, elektrisch gekoppelt. Der normale Betriebszustand ist insbesondere dadurch gekennzeichnet, dass alle Ladegeräte funktionsfähig sind. Im Fehlerfall hingegen, d.h. bei Ausfall eines oder mehrerer der Ladegeräte, wird zumindest einer der Energiespeicher von einem ihm nicht als Hauptladegerät zugeordneten der Ladegeräte elektrisch gespeist. Somit ist es möglich, den wenigstens einen Energiespeicher selbst dann zu laden, wenn das ihm zugeordnete Hauptladegerät ausgefallen ist.

Jedem der Energiespeicher ist genau ein anderes der Ladegeräte als Nebenladegerät zugeordnet. In einem normalen Betriebszustand ist insbesondere jeder der Energiespeicher von dem ihm zugeordneten Nebenladegerät elektrisch entkoppelt. Im Fehlerfall hingegen, d.h. bei Ausfall eines oder mehrerer der Ladegeräte, wird zumindest einer der Energiespeicher, dessen Hauptladegerät ausgefallen ist, von dem ihm zugeordneten Nebenladegerät elektrisch gespeist. Insbesondere wird eines oder wenigstens eines der Ladegeräte alternierend mit einem ersten und mit einem zweiten der Energiespeicher elektrisch gekoppelt, denen es als Hauptladegerät (des ersten Energiespeichers) bzw. als Nebenladegerät (des zweiten Energiespeichers) zugeordnet ist, wenn das dem zweiten Energiespeicher zugeordnete Hauptladegerät ausgefallen ist.

Die Schaltungsanordnung weist bevorzugt je Energiespeicher einen diesem zugeordneten elektrischen Hauptschalter auf, sodass jeder der Energiespeicher durch den ihm zugeordneten Hauptschalter mit dem ihm zugeordneten Hauptladegerät elektrisch gekoppelt ist oder werden kann. Ferner weist die Schaltungsanordnung je Energiespeicher vorzugsweise einen diesem zugeordneten elektrischen Nebenschalter auf, sodass jeder der Energiespeicher durch den ihm zugeordneten Nebenschalter mit dem ihm zugeordneten Nebenladegerät elektrisch gekoppelt ist oder werden kann. Durch die Kombination von Hauptschaltern und Nebenschaltern ist es mittels der Schaltungsanordnung möglich, jeden der Energiespeicher mit dem ihm zugeordneten Hauptladegerät und mit dem ihm zugeordneten Nebenladegerät elektrisch zu koppeln oder koppeln zu können.

Bevorzugt ist mit der Schaltungsanordnung eine elektrische Steuereinrichtung elektrisch verbunden, mittels welcher die Schaltungsanordnung und/oder deren Schalter gesteuert bzw. betätigt werden oder werden können. Die Steuereinrichtung kann integriert mit oder extern von der Schaltungsanordnung ausgebildet sein. Bevorzugt umfassen die Schalter der Schaltungsanordnung die Hauptschalter und/oder die Nebenschalter. Insbesondere ist mit der Steuereinrichtung ein Ausfall eines oder mehrerer der Ladegeräte erfassbar, sodass die Schalter mittels der Steuereinrichtung gemäß dem Funktionszustand der Ladegräte geschaltet werden oder werden können. Die Schalter sind z.B. durch Relais und/oder Transistoren gebildet.

Jeder der Energiespeicher kann einen oder mehrere elektrische Kondensatoren umfassen. Ferner ist es möglich, dass die Energiespeicher elektrische Kondensatoren und elektrische Akkumulatoren umfassen. Bevorzugt weist jeder der elektrischen Energiespeicher aber einen oder mehrere elektrische Akkumulatoren auf, die hier auch als Batterien bezeichnet werden.

Die Ladegeräte sind insbesondere derart ausgelegt, dass die den Energiespeichern zugeführten Ladeströme mittels der Ladegeräte gesteuert und/oder geregelt werden oder werden können. Somit ist eine kontrollierte Aufladung der Energiespeicher möglich, was insbesondere im Fall von Batterien als Energiespeicher die Lebensdauer der Batterien erhöht oder erhöhen kann.

Mittels der Ladegeräte können herkömmliche, z.B. aus einschlägigen Normen bekannte, Ladeverfahren durchgeführt werden. Bevorzugt werden die Energiespeicher aber mit einer Pulsladetechnik geladen, die insbesondere mittels der Ladegeräte durchgeführt wird oder werden kann. Somit kann eine unsymmetrische Zellenladung vermieden werden, wenn es sich bei den Energiespeichern um Batterien handelt.

Da die erfindungsgemäße Notstromversorgungseinrichtung insbesondere in einem Rotorblattverstellsystem einer Windkraftanlage eingesetzt wird, sind die Energiespeicher bevorzugt mit Elektromotoren elektrisch gekoppelt oder koppelbar, die vorzugsweise mit Rotorblättern der Windkraftanlage gekoppelt sind, insbesondere mechanisch gekoppelt sind. Bei einem Netzausfall werden die Energiespeicher mit den Elektromotoren elektrisch gekoppelt, sodass die Rotorblätter der Windkraftanlage mittels der Elektromotoren in eine gewünschte Position gedreht werden können, insbesondere in die sogenannte Fahnenstellung.

Die Elektromotoren sind bevorzugt mit Stromrichtern oder Umrichtern elektrisch gekoppelt und werden von diesen gespeist oder können von diesen gespeist werden, die vorzugsweise zusammen mit den Ladegeräten aus demselben elektrischen Netz gespeist werden oder werden können. Bei dem Netz kann es sich z.B. um ein lokales Windkraftanlagennetz, um ein mehrere Windkraftanlagen umfassendes Netz, um das öffentliche Stromversorgungsnetz oder um ein anderes Netz handeln. Das Netz ist insbesondere ein Wechselstromnetz, kann aber auch ein Gleichstromnetz sein.

Windkraftanlagen weisen regelmäßig zwei oder drei Rotorblätter auf. Somit beträgt auch die Anzahl der Energiespeicher bevorzugt wenigstens zwei oder wenigstens drei. Insbesondere beträgt die Anzahl der Energiespeicher drei.

Eine Windkraftanlage kann eine Halterung aufweisen , an der ein durch Wind antreibbarer oder angetriebener Rotor um eine Rotorachse drehbar gelagert ist, der eine Rotornabe und mehrere Rotorblätter aufweist, die jeweils um eine Blattachse drehbar an der Rotornabe gelagert sind, und einem Rotorblattverstellsystem, welches je Rotorblatt wenigstens einen Elektromotor aufweist, mittels welchem das jeweilige Rotorblatt um die jeweilige Blattachse drehbar ist. Ferner ist eine erfindungsgemäße Notstromversorgungseinrichtung vorgesehen, deren Energiespeicher mit den Elektromotoren elektrisch gekoppelt oder koppelbar sind. Die Notstromversorgungseinrichtung kann gemäß allen in diesem Zusammenhang beschriebenen Ausgestaltungen weitergebildet sein.

Die Anzahl der Rotorblätter beträgt vorzugsweise wenigstens zwei oder wenigstens drei. Insbesondere beträgt die Anzahl der Rotorblätter drei. Jede der Blattachsen verläuft insbesondere quer oder schräg zur Rotorachse.

Die Erfindung betrifft auch die Verwendung einer erfindungsgemäßen Notstromversorgungseinrichtung mit den Merkmalen des Anspruchs 13.

Fernerhin betrifft die Erfindung ein Verfahren mit den Merkmalen des Anspruchs 14.

Bevorzugt bleibt aber auch nach, bei und/oder während des Ausfalls die dauerhafte elektrische Koppelung zwischen wenigstens einem anderen der nicht ausgefallen Ladegräte und dem mit diesem verbundene Energiespeicher bestehen.

Für die erfindungsgemäße Verwendung und das erfindungsgemäße Verfahren können die Notstromversorgungseinrichtung und/oder die Windenergieanlage gemäß allen beschriebenen Ausgestaltungen weitergebildet sein.

Die Erfindung wird nachfolgend anhand einer bevorzugten Ausführungsform unter Bezugnahme auf die Zeichnung beschrieben. In der Zeichnung zeigen:
- Fig. 1:: eine schematische Darstellung einer Windkraftanlage,
- Fig. 2:: ein schematisches Blockschaltbild einer Notstromversorgungseinrichtung gemäß einer Ausführungsform der Erfindung,
- Fig. 3:: ein schematisches Blockschalbild des Teils eines Rotorblattverstellsystems für ein Rotorblatt und
- Fig. 4:: eine schematische Draufsicht auf den Rotor der Windenergieanlage.

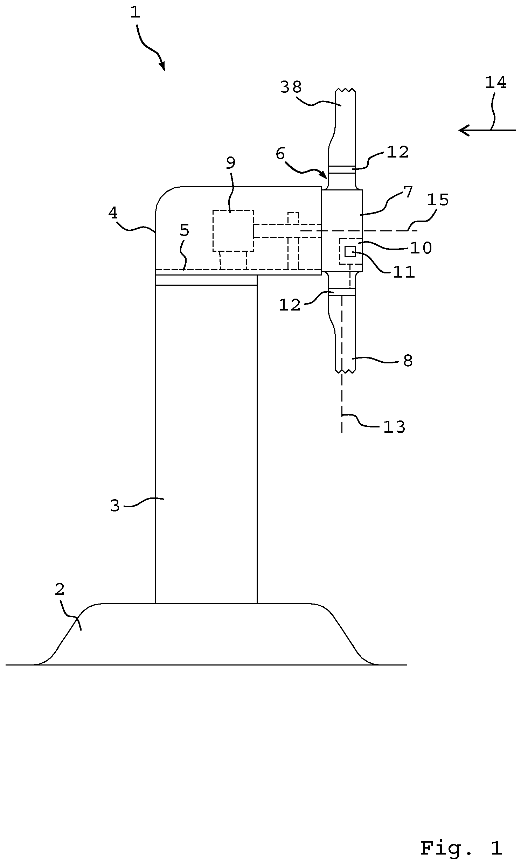

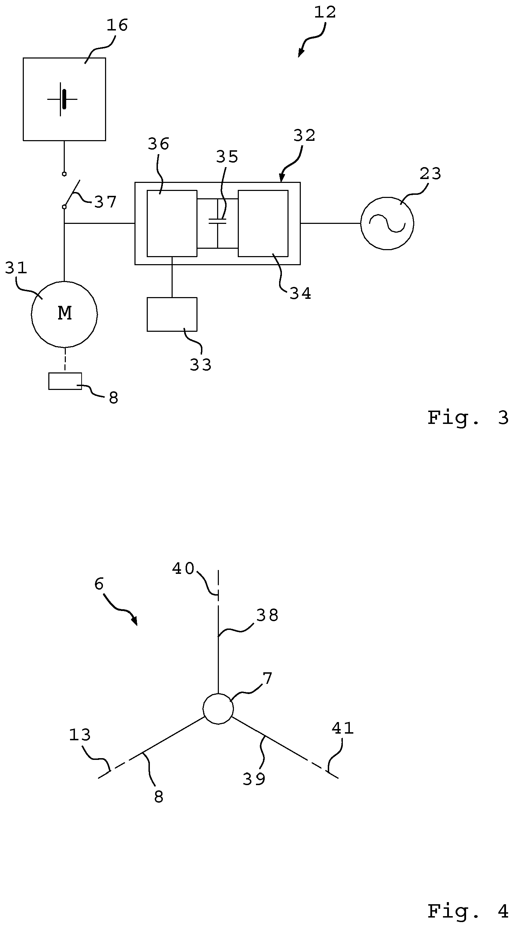

Aus Fig. 1 ist eine schematische Ansicht einer Windkraftanlage 1 ersichtlich, die einen auf einem Fundament 2 aufstehenden Turm 3 umfasst, an dessen dem Fundament 2 abgewandten Ende ein Maschinenhaus 4 angeordnet ist. Das Maschinenhaus 4 weist eine Halterung (Träger) 5 auf, an der ein Rotor 6 drehbar gelagert ist, der eine Rotornabe 7 und mehrere mit dieser verbundene Rotorblätter 8, 38 und 39 umfasst (siehe auch Fig. 4). Der Rotor 6 ist mechanisch mit einem elektrischen Generator 9 gekoppelt, der in dem Maschinenhaus 4 angeordnet und an dem Träger 5 befestigt ist.

In der Rotornabe 7 ist ein Rotorblattverstellsystem 10 angeordnet, welches eine Notstromversorgungseinrichtung 11 gemäß einer Ausführungsform der Erfindung und Blattwinkelverstellantriebe 12 umfasst, mittels welchen die Rotorblätter 8, 38 und 39 um ihre jeweilige Längsachse 13, 40 bzw. 41 relativ zur Rotornabe 7 gedreht werden können (siehe auch Fig. 4). Der Rotor 6 wird durch Windkraft 14 um eine Rotorachse 15 gedreht.

Fig. 4 zeigt eine schematische Draufsicht auf den Rotor 6, sodass die drei Rotorblätter 8, 38 und 39 ersichtlich sind.

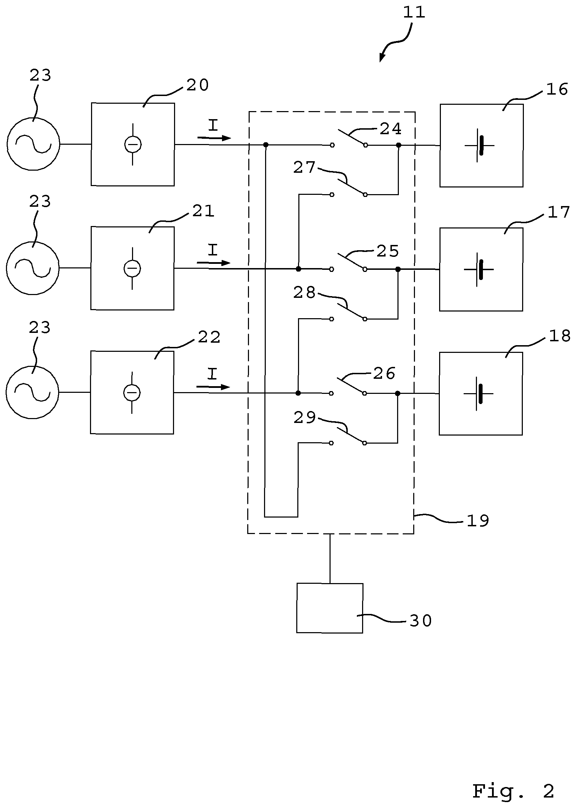

Aus Fig. 2 ist eine schematische Darstellung der Notstromversorgungseinrichtung 11 ersichtlich, wobei drei Batterien 16, 17 und 18 über eine Schaltungsanordnung 19 mit drei Batterieladegeräten 20, 21 bzw. 22 gekoppelt oder koppelbar sind. Dabei ist das Ladegerät 20 der Batterie 16 als Hauptladegerät zugeordnet, das Ladegerät 21 ist der Batterie 17 als Hauptladegerät zugeordnet, und das Ladegerät 22 ist der Batterie 18 als Hauptladegerät zugeordnet. Ferner ist das Ladegerät 21 der Batterie 16 als Nebenladegerät zugeordnet, das Ladegerät 22 ist der Batterie 17 als Nebenladegerät zugeordnet, und das Ladegerät 20 ist der Batterie 18 als Nebenladegerät zugeordnet. Die Ladegeräte 20, 21 und 22 sind mit einem elektrischen Wechselstromnetz 23 gekoppelt und werden aus diesem gespeist.

Die Schaltungsanordnung weist drei Hauptschalter 24, 25 und 26 und drei Nebenschalter 27, 28 und 29 auf, sodass mittels der Haupt- und Nebenschalter jede der Batterien mit dem jeweiligen Hauptladegerät und mit dem jeweiligen Nebenladegerät elektrisch gekoppelt werden kann. Dabei sind der Hauptschalter 24 und der Nebenschalter 27 der Batterie 16 zugeordnet, der Hauptschalter 25 und der Nebenschalter 28 sind der Batterie 17 zugeordnet, und der Hauptschalter 26 und der Nebenschalter 29 sind der Batterie 18 zugeordnet.

Ein normaler Betriebszustand ist dadurch gekennzeichnet, dass alle Ladegeräte 20, 21 und 22 funktionsbereit sind. Insbesondere sind im normalen Betriebszustand die Hauptschalter 24, 25 und 26 geschlossen und die Nebenschalter 27, 28 und 29 geöffnet. In diesem Zustand ist jede der Batterien ausschließlich mit dem ihr zugeordneten Hauptladegerät elektrisch verbunden. Die den Batterien 16, 17 und 18 von den Ladegeräten zugeführten elektrischen Ladeströme I können dabei mittels der Ladegeräte 20, 21, 22 geregelt und/oder gesteuert werden. Fällt eines der Ladegeräte aus, hier z.B. das Ladegerät 22, so kann durch Schließen des Nebenschalters 29 die Batterie 18 durch das Ladegerät 20 aufgeladen werden, wobei der Schalter 26 insbesondere geöffnet ist. Die Batterien 16 und 18 werden dann durch das Ladegerät 20 alternierend aufgeladen, wohingegen das Ladegerät 21 die Batterie 17 dauerhaft lädt. Entsprechendes gilt, falls das Ladegerät 21 oder das Ladegerät 20 ausfällt. Fällt das Ladegerät 21 aus, so kann durch Schließen des Nebenschalters 28 die Batterie 17 durch das Ladegerät 22 aufgeladen werden, wobei der Schalter 25 insbesondere geöffnet ist. Die Batterien 17 und 18 werden dann durch das Ladegerät 22 alternierend aufgeladen, wohingegen das Ladegerät 20 die Batterie 16 dauerhaft lädt. Fällt das Ladegerät 20 aus, so kann durch Schließen des Nebenschalters 27 die Batterie 16 durch das Ladegerät 21 aufgeladen werden, wobei der Schalter 24 insbesondere geöffnet ist. Die Batterien 16 und 17 werden dann durch das Ladegerät 21 alternierend aufgeladen, wohingegen das Ladegerät 22 die Batterie 18 dauerhaft lädt.

Gemäß Fig. 2 ist der Hauptschalter 24 zwischen das Ladegerät 20 und die Batterie 16 geschaltet, der Hauptschalter 25 ist zwischen das Ladegerät 21 und die Batterie 17 geschaltet, und der Hauptschalter 26 ist zwischen das Ladegerät 22 und die Batterie 18 geschaltet. Ferner ist der Nebenschalter 27 zwischen das Ladegerät 21 und die Batterie 16 geschaltet, der Nebenschalter 28 ist zwischen das Ladegerät 22 und die Batterie 17 geschaltet, und der Nebenschalter 29 ist zwischen das Ladegerät 20 und die Batterie 18 geschaltet.

Die Schalter der Schaltungsanordnung 19 können mittels einer elektrischen Steuereinrichtung 30 betätigt werden, die mit der Schaltungsanordnung 19 elektrisch verbunden ist. Ferner ist mit der Steuereinrichtung 30 ein Ausfall eines oder mehrerer der Ladegeräte erfassbar, sodass die Schalter mittels der Steuereinrichtung 30 gemäß dem Funktionszustand der Ladegräte geschaltet werden oder werden können.

Aus Fig. 3 ist ein schematisches Blockschaltbild eines der Blattwinkelverstellantriebe 12 des Rotorblattverstellsystems 10 für das Rotorblatt 8 dargestellt, wobei ein hier als Gleichstrommotor ausgebildeter Elektromotor 31 elektrisch mit einem Umrichter 32 gekoppelt ist, der mit dem Netz 23 verbunden ist und aus diesem gespeist wird. Ferner ist der Umrichter 32 mit einer Steuerung 33 verbunden, mittels welcher der Umrichter 32 gesteuert wird. Der Umrichter 32 umfasst einen Gleichrichter 34, einen Zwischenkreis mit Kondensator 35 und eine Ausgangsstufe 36, die hier z.B. ein Gleichstromsteller oder ein anderes Gerät zur Bereitstellung eines steuerbaren Gleichstroms für den Elektromotor 31 ist. Für den Fall dass das Netz 23 ausfällt, wird ein Schalter 37 geschlossen, mittels welchem die Batterie 16 direkt auf den Elektromotor 31 geschaltet wird. Dadurch wird das mit dem Elektromotor 31 mechanisch gekoppelte Rotorblatt 8 um die Blattachse 13 in die Fahnenstellung gedreht. Für die Rotorblätter 38 und 39 sind ebenfalls Blattwinkelverstellantriebe vorgesehen, die dem in Fig. 3 gezeigten entsprechen, allerdings mit den Batterien 17 bzw. 18 anstelle der Batterie 16 versehen sind. Somit können auch die Rotorblätter 38 und 39 bei einem Netzausfall um ihre Blattachse 40 bzw. 41 in die Fahnenstellung gedreht werden.

### Bezugszeichenliste

- 1: Windkraftanlage
- 2: Fundament
- 3: Turm
- 4: Maschinenhaus
- 5: Träger / Halterung
- 6: Rotor
- 7: Rotornabe
- 8: Rotorblatt
- 9: elektrischer Generator
- 10: Rotorblattverstellsystem
- 11: Notstromversorgungseinrichtung
- 12: Blattwinkelverstellantrieb
- 13: Blattachse
- 14: Wind
- 15: Rotorachse
- 16: Batterie
- 17: Batterie
- 18: Batterie
- 19: Schaltungsanordnung
- 20: Batterieladegerät
- 21: Batterieladegerät
- 22: Batterieladegerät
- 23: elektrisches Netz
- 24: Hauptschalter
- 25: Hauptschalter
- 26: Hauptschalter
- 27: Nebenschalter
- 28: Nebenschalter
- 29: Nebenschalter
- 30: Steuereinrichtung
- 31: Elektromotor
- 32: Umrichter
- 33: Steuerung
- 34: Gleichrichter
- 35: Zwischenkreiskondensator
- 36: Ausgangsstufe
- 37: Schalter
- 38: Rotorblatt
- 39: Rotorblatt
- 40: Blattachse
- 41: Blattachse
- I: elektrischer Strom

## Patentansprüche

1. Notstromversorgungseinrichtung für ein Rotorblattverstellsystem (10) einer Windkraftanlage (1), mit mehreren elektrischen Energiespeichern (16, 17, 18), einem elektrischen Lagegerät (20), einer elektrischen Schaltungsanordnung (19), mittels welcher das Ladegerät (20) mit mehreren der Energiespeicher (16, 17, 18) elektrisch gekoppelt werden kann, wobei ein oder mehrere zusätzliche Ladegeräte (21, 23) vorgesehen sind, sodass die Anzahl der Ladegeräte der Anzahl der Energiespeicher entspricht, wobei mittels der Schaltungsanordnung (19) jedes der Ladegeräte (20, 21, 22) mit mehren der Energiespeicher (16, 17, 18) und jeder der Energiespeicher (16, 17, 18) mit mehreren der Ladegeräte (20, 21, 22) elektrisch gekoppelt werden kann, **dadurch gekennzeichnet, dass** jedem der Energiespeicher (16, 17, 18) genau eines der Ladegeräte (20, 21, 22) als Hauptladegerät und genau ein anderes der Ladegeräte (20, 21, 22) als Nebenladegerät zugeordnet ist.

2. Notstromversorgungseinrichtung nach Anspruch 1,
**dadurch gekennzeichnet, dass**
jedes der Ladegeräte (20, 21, 22) gleichzeitig nicht mit mehreren der Energiespeicher (16, 17, 18) gekoppelt ist.

3. Notstromversorgungseinrichtung nach Anspruch 1 oder 2,
**dadurch gekennzeichnet, dass**
in einem funktionsfähigen Zustand aller Ladegeräte jeder der Energiespeicher (16, 17, 18) nur mit dem ihm zugeordneten Hauptladegerät (20, 21, 22) elektrisch gekoppelt ist.

4. Notstromversorgungseinrichtung nach einem der vorangehenden Ansprüche,
**dadurch gekennzeichnet, dass**
bei Ausfall wenigstens eines der Ladegeräte zumindest einer der Energiespeicher (16, 17, 18) von dem ihm zugeordneten Nebenladegerät (20, 21, 22) elektrisch gespeist wird.

5. Notstromversorgungseinrichtung nach einem der vorangehenden Ansprüche,
**dadurch gekennzeichnet, dass**
eines der Ladegeräte (20, 21, 22) alternierend mit einem ersten und mit einem zweiten der Energiespeicher (16, 17, 18) elektrisch gekoppelt wird oder werden kann, denen es als Hauptladegerät bzw. als Nebenladegerät zugeordnet ist, wenn das dem zweiten Energiespeicher (16, 17, 18) zugeordnete Hauptladegerät ausgefallen ist.

6. Notstromversorgungseinrichtung nach einem der vorangehenden Ansprüche,
**dadurch gekennzeichnet, dass**
die Schaltungsanordnung (19) je Energiespeicher (16, 17, 18) einen diesem zugeordneten elektrischen Hauptschalter (24, 25, 26) aufweist, sodass jeder der Energiespeicher (16, 17, 18) durch den ihm zugeordneten Hauptschalter (24, 25, 26) mit dem ihm zugeordneten Hauptadegerät (20, 21, 22) elektrisch gekoppelt ist oder werden kann.

7. Notstromversorgungseinrichtung nach einem der vorangehenden Ansprüche,
**dadurch gekennzeichnet, dass**
die Schaltungsanordnung (19) je Energiespeicher (16, 17, 18) einen diesem zugeordneten elektrischen Nebenschalter (27, 28, 29) aufweist, sodass jeder der Energiespeicher (16, 17, 18) durch den ihm zugeordneten Nebenschalter (27, 28, 29) mit dem ihm zugeordneten Nebenladegerät (20, 21, 22) elektrisch gekoppelt ist oder werden kann.

8. Notstromversorgungseinrichtung nach einem der vorangehenden Ansprüche,
**dadurch gekennzeichnet, dass**
jeder der elektrischen Energiespeicher (16, 17, 18) eine oder mehrere elektrische Batterien umfasst.

9. Notstromversorgungseinrichtung nach einem der vorangehenden Ansprüche,
**dadurch gekennzeichnet, dass**
die den Energiespeichern (16, 17, 18) zugeführten Ladeströme durch die Ladegeräte (20, 21, 22) steuerbar oder regelbar ist.

10. Notstromversorgungseinrichtung nach einem der vorangehenden Ansprüche,
**dadurch gekennzeichnet, dass**
die Energiespeicher (16, 17, 18) mit Elektromotoren (31) elektrisch koppelbar sind, die mit Rotorblättern (8, 38, 39) der Windkraftanlage (1) mechanisch gekoppelt sind.

11. Notstromversorgungseinrichtung nach Anspruch 10,
**dadurch gekennzeichnet, dass**
die Elektromotoren (31) mit Stromrichtern (36) elektrisch gekoppelt sind und von diesen gespeist werden oder werden können, die zusammen mit den Ladegeräten (16, 17, 18) aus demselben elektrischen Netz (23) gespeist werden oder werden können.

12. Notstromversorgungseinrichtung nach einem der vorangehenden Ansprüche,
**dadurch gekennzeichnet, dass**
die Anzahl der Energiespeicher (16, 17, 18) drei beträgt.

13. Verwendung einer Notstromversorgungseinrichtung nach einem der vorangehenden Ansprüche für ein Rotorblattverstellsystem (10) einer Windkraftanlage (1),
**dadurch gekennzeichnet, dass**
in einem funktionsfähigen Zustand aller Ladegräte (20, 21, 22) jeder der Energiespeicher (16, 17, 18) mit genau einem der Ladegeräte (20, 21, 22) als Hauptladegerät dauerhaft elektrisch gekoppelt ist oder wird, und wobei während eines Ausfalls eines der Ladegräte (22) genau eines der nicht ausgefallenen Ladegeräte (20) als Nebenladegerät alternierend mit zwei der Energiespeicher (16, 18) elektrisch gekoppelt wird.

14. Verfahren zum Betreiben einer Notstromversorgungseinrichtung eines Rotorblattverstellsystems einer Windkraftanlage, wobei die Notstromversorgungseinrichtung (11) mehrere elektrische Energiespeicher (16, 17, 18) und entsprechend viele elektrische Ladegeräte (20, 21, 23) umfasst, **dadurch gekennzeichnet, dass** in einem funktionsfähigen Zustand aller Ladegräte (20, 21, 22) jeder der Energiespeicher (16, 17, 18) mit genau einem der Ladegeräte (20, 21, 22) als Hauptladegerät dauerhaft elektrisch gekoppelt ist oder wird, und wobei während eines Ausfalls eines der Ladegräte (22) genau eines der nicht ausgefallenen Ladegeräte (20) als Nebenladegerät alternierend mit zwei der Energiespeicher (16, 18) elektrisch gekoppelt wird.

15. Verfahren nach Anspruch 14,
**dadurch gekennzeichnet, dass**
während des Ausfalls die dauerhafte elektrische Koppelung zwischen wenigstens einem anderen der nicht ausgefallen Ladegräte (20, 21, 22) und dem mit diesem verbundene Energiespeicher (16, 17, 18) bestehen bleibt.

## Claims

1. Emergency power supply device for the rotor blade adjustment system (10) of a wind turbine (1) with several electrical electric power accumulators (16, 17, 18), an electrical charging unit (20), an electrical circuit arrangement (19) which allows the charging unit (20) to be electrically coupled to several of the electric power accumulators (16, 17, 18), whereby one or more additional charging units (21, 23) are provided so that the number of charging units corresponds to the number of electric power accumulators, whereby the circuit arrangement (19) allows each of the charging units (20, 21, 22) to be electrically coupled to several of the electric power accumulators (16, 17, 18) and each of the electric power accumulators (16, 17, 18) can be electrically coupled to several of the charging units (20, 21, 22), **characterized in that** precisely one of the charging units (20, 21, 22) is assigned as a main charging unit to each of the electric power accumulators (16, 17, 18), and precisely one other of the charging units (20, 21, 22) is assigned as a secondary charging unit.

2. Emergency power supply device in accordance with claim 1, **characterized in that** each of the charging units (20, 21, 22) is not coupled simultaneously with several of the electric power accumulators (16, 17, 18).

3. Emergency power supply device in accordance with claim 1 or 2, **characterized in that** when in an operative state, all charging devices of each of the electric power accumulators (16, 17, 18) is only coupled to the main charging unit (20, 21, 22) assigned to it.

4. Emergency power supply device in accordance with one of the above claims, **characterized in that** in the event of the failure of at least one of the charging units, at least one of the electric power accumulators (16, 17, 18) is electrically fed by the secondary charging unit (20, 21, 22) assigned to it.

5. Emergency power supply device in accordance with one of the above claims, **characterized in that** one of the charging units (20, 21, 22) is or can be coupled in alternation with a first and with a second of the electric power accumulators (16, 17, 18) to which it is assigned as a main or secondary charging unit, if the main charging unit assigned to the second electric power accumulator (16, 17, 18) fails.

6. Emergency power supply device in accordance with one of the above claims, **characterized in that**
the switching arrangement (19) for each electric power accumulator (16, 17, 18) has an electrical main switch (24, 25, 26) assigned to it, so that each of the electric power accumulators (16, 17, 18) is or can be electrically coupled to the main charging unit (20, 21, 22) by means of the main switch (24, 25, 26) assigned to it.

7. Emergency power supply device in accordance with one of the above claims, **characterized in that**
the circuit arrangement (19) for each electric power accumulator (16, 17, 18) has an electrical secondary switch (27, 28, 29) assigned to it, so that each of the electric power accumulators (16, 17, 18) is or can be electrically coupled to the secondary charging unit (20, 21, 22) assigned to it by the secondary switch (27, 28, 29) assigned to it.

8. Emergency power supply device in accordance with one of the above claims, **characterized in that** each of the electric power accumulators (16, 17, 18) encompasses one or more electrical batteries.

9. Emergency power supply device in accordance with one of the above claims, **characterized in that** the charging currents fed to the electric power accumulators (16, 17, 18) may be controlled or regulated by the charging units (20, 21, 22).

10. Emergency power supply device in accordance with one of the above claims, **characterized in that** the electric power accumulators (16, 17, 18) can be electrically coupled to electric motors (31) which are mechanically coupled to the rotor blades (8, 38, 39) of a wind turbine (1).

11. Emergency power supply device in accordance with claim 10, **characterized in that** the electric motors (31) are electrically coupled to rectifiers (36) and are or can be fed by them, which are or can be fed together with the electric power accumulators (16, 17, 18) from the same electrical network (23)

12. Emergency power supply device in accordance with one of the above claims, **characterized in that** the number of electric power accumulators (16, 17, 18) is three.

13. Use of an emergency power supply device in accordance with one of the above claims for the rotor blade adjustment system (10) of a wind turbine (1) **characterized in that** when all charging units (20, 21, 22) are in an operative state, each of the electric power accumulators (16, 17, 18) is or will be permanently electrically coupled to precisely one of the charging units (20, 21, 22) as the main charging unit, and whereby during the failure of one of the charging units (22), precisely one of the charging units (20) which has not failed is electrically coupled as the secondary charging device in alternation with two of the electric power accumulators (16, 18).

14. Method for the operation of an emergency power supply device for the rotor blade adjustment system of a power turbine, whereby the emergency power supply device (11) comprises several electric power accumulators (16, 17, 18) and a corresponding number of electrical charging units (20, 21, 23), **characterized in that** when all charging units (20, 21, 22) are in an operative state, each of the electric power accumulators (16, 17, 18) is or will be permanently electrically coupled to precisely one of the charging units (22) as the main charging unit, and whereby during the failure of one of the charging units (22), precisely one of the charging units (20) which has not failed is electrically coupled as the secondary charging device in alternation with two of the electric power accumulators (16, 18).

15. Method in accordance with claim 14, **characterized in that** during the failure, the permanent electrical coupling between at least one of the other charging units (20, 21, 22) which has not failed and the electric power accumulator (16, 17, 18) connected to it remains in place.

## Revendications

1. Dispositif d'alimentation électrique de secours pour un système de régulation de pas de pale (10) d'une éolienne (1), avec plusieurs accumulateurs d'énergie électrique (16, 17, 18), un appareil de charge électrique (20), un agencement de commutation électrique (19), au moyen duquel l'appareil de charge (20) peut être accouplé électriquement à plusieurs des accumulateurs d'énergie (16, 17, 18), un ou plusieurs appareils de charge supplémentaires (21, 23) étant prévus, de sorte que le nombre d'appareils de charge correspond au nombre d'accumulateurs d'énergie, au moyen de l'agencement de commutation (19) chacun des appareils de charge (20, 21, 22) pouvant être accouplé électriquement à plusieurs des accumulateurs d'énergie (16, 17, 18) et chacun des accumulateurs d'énergie (16, 17, 18) pouvant être accouplé électriquement à plusieurs des appareils de charge (20, 21, 22), **caractérisé en ce qu'**exactement un des appareils de charge (20, 21, 22) en tant qu'appareil de charge principal et exactement un autre des appareils de charge (20, 21, 22) en tant qu'appareil de charge secondaire est affecté à chacun des accumulateurs d'énergie (16, 17, 18).

2. Dispositif d'alimentation électrique de secours selon la revendication 1,**caractérisé en ce que** chacun des appareils de charge (20, 21, 22) ne peut pas être accouplé simultanément à plusieurs des accumulateurs d'énergie (16, 17, 18).

3. Dispositif d'alimentation électrique de secours selon la revendication 1 ou 2, **caractérisé en ce que**, dans un état fonctionnel de tous les appareils de charge, chacun des accumulateurs d'énergie (16, 17, 18) n'est accouplé électriquement qu'à l'appareil de charge principal (20, 21, 22) qui lui est affecté.

4. Dispositif d'alimentation électrique de secours selon l'une des revendications précédentes, **caractérisé en ce que**, en cas de panne d'au moins l'un des appareils de charge, au moins un des accumulateurs d'énergie (16, 17, 18) est alimenté en énergie électrique par l'appareil de charge secondaire (20, 21, 22) qui lui est affecté.

5. Dispositif d'alimentation électrique de secours selon l'une des revendications précédentes, **caractérisé en ce que** l'un des appareils de charge (20, 21, 22) est ou peut être accouplé électriquement en alternance à un premier et un second des accumulateurs d'énergie (16, 17, 18), auquel il est affecté en tant qu'appareil de charge principal ou appareil de charge secondaire, lorsque l'appareil de charge principal affecté au second accumulateur d'énergie (16, 17, 18) est en panne.

6. Dispositif d'alimentation électrique de secours selon l'une des revendications précédentes, **caractérisé en ce que** l'agencement de commutation (19) de chaque accumulateur d'énergie (16, 17, 18) présente un interrupteur électrique principal (24, 25, 26) affecté à celui-ci, de sorte que chacun des accumulateurs d'énergie (16, 17, 18) est ou peut être accouplé électriquement par le biais de l'interrupteur principal (24, 25, 26) qui lui est affecté à l'appareil de charge principal (20, 21, 22) qui lui est affecté.

7. Dispositif d'alimentation électrique de secours selon l'une des revendications précédentes, **caractérisé en ce que** l'agencement de commutation (19) de chaque accumulateur d'énergie (16, 17, 18) présente un interrupteur électrique secondaire (27, 28, 29) affecté à celui-ci, de sorte que chacun des accumulateurs d'énergie (16, 17, 18) est ou peut être accouplé électriquement par le biais de l'interrupteur secondaire (27, 28, 29) qui lui est affecté à l'appareil de charge secondaire (20, 21, 22) qui lui est affecté.

8. Dispositif d'alimentation électrique de secours selon l'une des revendications précédentes, **caractérisé en ce que** chacun des accumulateurs d'énergie électrique (16, 17, 18) comprend une ou plusieurs batteries électriques.

9. Dispositif d'alimentation électrique de secours selon l'une des revendications précédentes, **caractérisé en ce que** les courants de charge fournis aux accumulateurs d'énergie (16, 17, 18) peuvent être commandés ou régulés par les appareils de charge (20, 21, 22).

10. Dispositif d'alimentation électrique de secours selon l'une des revendications précédentes, **caractérisé en ce que** les accumulateurs d'énergie (16, 17, 18) peuvent être accouplés électriquement à des moteurs électriques (31), qui sont accouplés de manière mécanique aux pales de rotor (8, 38, 39) de l'éolienne (1).

11. Dispositif d'alimentation électrique de secours selon la revendication 10, **caractérisé en ce que** les moteurs électriques (31) sont accouplés électriquement à des convertisseurs (36) et sont ou peuvent être alimentés par ceux-ci, lesquels sont ou peuvent être alimentés en même temps que les appareils de charge (16, 17, 18) du même réseau électrique (23).

12. Dispositif d'alimentation électrique de secours selon l'une des revendications précédentes, **caractérisé en ce que** le nombre d'accumulateurs d'énergie (16, 17, 18) est de trois.

13. Utilisation d'un dispositif d'alimentation électrique de secours selon l'une des revendications précédentes pour un système de régulation de pas de pale (10) d'une éolienne (1), **caractérisée en ce que**, dans un état fonctionnel de tous les appareils de charge (20, 21, 22), chacun des accumulateurs d'énergie (16, 17, 18) est accouplé électriquement de manière permanente à exactement l'un des appareils de charge (20, 21, 22) en tant qu'appareil de charge principal, et pendant une panne d'un des appareils de charge (22), exactement un des appareils de charge qui ne sont pas en panne (20) étant accouplé électriquement, en tant qu'appareil de charge secondaire, en alternance à deux des accumulateurs d'énergie (16, 18).

14. Procédé d'actionnement d'un dispositif d'alimentation électrique de secours d'un système de régulation de pas de pale d'une éolienne, le dispositif d'alimentation électrique de secours (11) comprend plusieurs accumulateurs d'énergie électrique (16, 17, 18) et, en conséquence, de nombreux appareils de charge électriques (20, 21, 23), **caractérisé en ce que**,dans un état fonctionnel de tous les appareils de charge (20, 21, 22), chacun des accumulateurs d'énergie (16, 17, 18) est accouplé électriquement de manière permanente, à exactement l'un des appareils de charge (20, 21, 22) en tant qu'appareil de charge principal, et pendant une panne d'un des appareils de charge (22), exactement un des appareils de charge qui ne sont pas en panne (20) étant accouplé électriquement, en tant qu'appareil de charge secondaire, en alternance à deux des accumulateurs d'énergie (16, 18).

15. Procédé selon la revendication 14, **caractérisé en ce que**, pendant la panne, l'accouplement électrique permanent entre au moins un autre des appareils de charge qui ne sont pas en panne (20, 21, 22) et l'accumulateur d'énergie (16, 17, 18) raccordé à celui-ci demeure.
